# NEUE EUROPÄISCHE PATENTSCHRIFT

(11) **EP 1 621 796 B2**
(45) Veröffentlichungstag und Bekanntmachung des Hinweises auf die Entscheidung über den Einspruch: **26.10.2011**
(45) Hinweis auf die Patenterteilung: 24.10.2007
(21) Anmeldenummer: 05015846.8
(22) Anmeldetag: 21.07.2005
(51) Int. Cl.: F16F 15/134, F16F 15/137

(54) **Torsionsschwingungsdämpfer**
Torsional vibration damper
Amortisseur de vibrations de torsion

(30) Priorität: 30.07.2004 DE 102004037416; 17.09.2004 DE 102004045113; 10.12.2004 DE 102004059457
(43) Veröffentlichungstag der Anmeldung: 01.02.2006
(73) Patentinhaber: Schaeffler Technologies GmbH & Co. KG, 91074 Herzogenaurach (DE)
(72) Erfinder: Mende, Hartmut, 77815 Bühl (DE); Jäckel, Johann, 77830 Bühlertal (DE); Reder, Reinhold, 76185 Karlsruhe (DE)

(56) Entgegenhaltungen:
- EP-A1- 0 236 159
- DE-A1- 4 215 593
- DE-A1- 4 341 373
- DE-A1- 4 433 467
- DE-A1- 10 019 873
- DE-A1- 10 119 878
- US-A- 2 286 502

## Beschreibung

Die Erfindung betrifft einen Torsionsschwingungsdämpfer mit einem Eingangsteil und einem Ausgangsteil, die entgegen der Wirkung von zwischen diesen wirksamen Energiespeichern zueinander verdrehbar sind, wobei die Energiespeicher wenigstens eine im Wesentlichen in Umfangsrichtung des Dämpfers angeordnete zusammendrückbare Schraubenfeder aufweisen, weiterhin wenigstens ein in Umfangsrichtung verschwenkbares Hebelelement von einem der Teile getragen ist, wobei sich am Hebelelement zumindest bei einer Relativverdrehung zwischen Eingangsteil und Ausgangsteil die Schraubenfeder mit einem ihrer umfangsmäßigen Enden derart abstützen kann, dass es infolge der Relativverdrehung gegenüber dem dieses tragenden Teil verschwenkt wird.

Torsionsschwingungsdämpfer der eingangs beschriebenen Art sind beispielsweise durch die DE 4 433 467 A1 und die DE 101 19 878 A1 vorgeschlagen worden. In diesen Anmeldungen ist auch Stand der Technik angegeben, bei dem die erfindungsgemäße Ausgestaltung zur Anwendung kommen kann.

Der vorliegenden Erfindung lag die Aufgabe zugrunde, Torsionsschwingungsdämpfer der eingangs genannten Art bezüglich der Dämpfungseigenschaften und der Lebensdauer weiterhin zu verbessern, wodurch in allen Betriebszuständen der Brennkraftmaschine bzw. des Kraftfahrzeuges eine bessere Filtrierung unerwünschter Torsionsschwingungen im Antriebsstrang sowie dadurch hervorgerufene störende Geräusche weitgehend vermieden werden können. Weiterhin soll ein gemäß der Erfindung ausgestalteter Torsionsschwingungsdämpfer auch in besonders einfacher und wirtschaftlicher Weise herstellbar sein.

Gemäß der Erfindung wird dies durch die Merkmale des Ansprcuhs 1. Es wird also das entsprechende Federende während der Verschwenkung des Hebelelementes bzw. aufgrund der Verschwenkung des Hebelelementes radial abgestützt und zurückgehalten, wodurch vermieden werden kann, dass infolge der auf den entsprechenden Endabschnitt einwirkenden Fliehkraft eine unerwünschte hohe Reibung an einer radial äußeren Abstützfläche entsteht. Es wird also das entsprechende Federende bzw. zumindest Bereiche des Endabschnittes der Schraubenfeder gegenüber einer solchen Abstützfläche zurückgehalten bzw. radial abgehoben. Dadurch wird gewährleistet, dass zumindest einzelne Endwindungen der Schraubenfeder praktisch ohne dass diese eine Reibung erzeugen über einen bestimmten Drehzahlbereich verformt werden können.

Die Konturen des Hebelelementes können unmittelbar an diesem angeformt sein oder aber durch ein zusätzliches von diesem getragenes Bauelement gebildet sein. Auch die am Ende einer Schraubenfeder vorgesehenen Gegenkonturen können unmittelbar durch die Windungen der Schraubenfeder gebildet sein oder aber durch ein zusätzliches Bauteil, welches am entsprechenden Ende der Schraubenfeder vorgesehen ist und, falls notwendig, in Achsrichtung der Schraubenfeder betrachtet, fest an dem Ende aufgenommen ist. Letzteres kann beispielsweise durch einen Formschluss zwischen dem entsprechenden Bauelement und zumindest einer Windung des Federendes, die als Schnappverbindung ausgebildet sein kann, gewährleistet werden.

Das Hebelelement ist am Eingangsteil und/oder am Ausgangsteil des Torsionsschwingungsdämpfers verschwenkbar gelagert. Bei einer derartigen Ausgestaltung bildet also das Hebelelement ein eigenes Bauteil. Dabei bringt ein zusätzlicher bzw. separater Energiespeicher den Verschwenk- bzw. Verdrehwiderstand für das Hebelelement auf. Das Hebelelement wird also mittels eines Energiespeichers derart verspannt, dass dessen Abstützbereiche für das zugeordnete Federende in Richtung dieses Federendes gedrängt werden.

In vorteilhafter Weise kann das Eingangsteil oder das Ausgangsteil durch ein flanschförmiges Bauteil gebildet sein, welches das wenigstens eine Hebelelement trägt.

Durch die erfindungsgemäße Ausgestaltung kann gewährleistet werden, dass der durch das Hebelelement erzeugte Verdrehwiderstand zwischen Eingangsteil und Ausgangsteil und die zwischen letzteren ebenfalls wirksame Schraubenfeder wirkungsmäßig in Reihe geschaltet sind.

Die Schraubenfeder kann sich in vorteilhafter Weise in Umfangsrichtung des Torsionsschwingungsdämpfers erstrecken und innerhalb des Torsionsschwingungsdämpfers eine fliehkraftabhängige, der Federwirkung dieser Schraubenfeder parallel geschaltete Reibung erzeugen, wodurch der durch die Schraubenfeder insgesamt erzeugte dynamische Verdrehwiderstand drehzahlabhängig ist. Die Schraubenfeder bzw. deren Windungen können sich dabei unmittelbar an einer die Schraubenfeder übergreifenden Wandung abstützen.

Es können aber auch über die Länge der Schraubenfeder betrachtet einzelne Gleit- bzw. Abstützschuhe vorgesehen sein, welche die Schraubenfeder über ihre Länge betrachtet stellenweise radial abstützen. Bezüglich der Ausgestaltung und Anordnung bzw. Führung derartiger Schraubenfedern wird auf die DE 199 12 970 A1, DE 199 09 044 A1, DE 196 03 248 A1, DE 196 48 342 A1, DE 102 09 838 A1 und DE 102 41 879 A1 verwiesen.

Besonders zweckmäßig kann es sein, wenn die Schraubenfeder zumindest an ihrem mit einem Hebelelement zusammenwirkenden Ende eine Zwischenlage trägt, welche die Gegenkonturen bildet, die mit den Konturen des Hebelelementes zusammenwirken.

Vorteilhaft kann es sein, wenn das Hebelelement derart verschwenkbar ist, dass dessen Rückhaltekonturen während der Verschwenkung auf einer Bewegungsbahn verlagert werden, die gegenüber der Rotationsachse der Dämpfungseinrichtung einen sich verändernden, vorzugsweise sich verkleinernden Abstand aufweist. Das Hebelelement kann dabei derart verschwenkbar bzw. elastisch verformbar sein, dass bei einer Verschwenkung bzw. Verformung des Hebelelementes infolge einer umfangsmäßigen Beaufschlagung durch die Schraubenfeder die Abstützkonturen des Hebelelementes entlang einer Bewegungsbahn derart verlagert werden, dass deren Abstand von der Rotationsachse des Torsionsschwingungsdämpfers kleiner wird, wodurch das entsprechende Federende in Richtung der Rotationsachse gedrängt bzw. gezogen wird. Dadurch wird gewährleistet, dass das entsprechende Ende der Schraubenfeder gegenüber einer radialen Abstützfläche bzw. Abstützwandung zurückgezogen und somit eine Reibungsdämpfung vermieden wird.

Die Konturen des Hebelelementes können zumindest durch eine sich in Umfangsrichtung erstreckende nasenförmige Anformung gebildet sein. Die am zugeordneten Federende vorgesehenen Gegenkonturen können durch eine Ausnehmung einer an diesem Federende vorgesehenen Zwischenlage wie z. B. Beaufschlagungsschuh gebildet sein. Es kann jedoch auch zweckmäßig sein, wenn das Hebelelement eine entsprechende Ausnehmung bzw. einen entsprechenden Ausschnitt aufweist und die Zwischenlage eine sich in Umfangsrichtung erstreckende Anformung.

Weitere vorteilhafte konstruktive Ausgestaltungsmerkmale sowie funktionelle Merkmale sind in der nun folgenden Figurenbeschreibung näher erläutert.

Dabei zeigen:
- Figur 1: einen Schnitt durch eine Schwingungsdämpfungseinrichtung,
- Figur 2: einen Schnitt gemäß der Linie II-II der Figur 1, wobei einige Bauteile nicht dargestellt wurden, um das Federelement besser darstellen zu können,
- Figur 3: eine der Figur 2 entsprechende Ansicht, wobei jedoch das Federelement bzw. der Federarm im verspannten Zustand dargestellt ist,
- Figur 4: eine im Wesentlichen der Figur 3 entsprechende Ansicht einer erfindungsgemäßen Ausgestaltungsvariante der Erfindung,
- Figur 5: eine weitere Ausgestaltungsvariante,
- Figuren 6 bis 9: eine besonders vorteilhafte Ausbildung eines Beaufschlagungsnapfes bzw. -schuhes für eine Schraubenfeder und
- Figuren 10 bis 12: eine weitere zweckmäßige Ausbildung eines Beaufschlagungsnapfes bzw.-schuhes für eine Schraubenfeder.

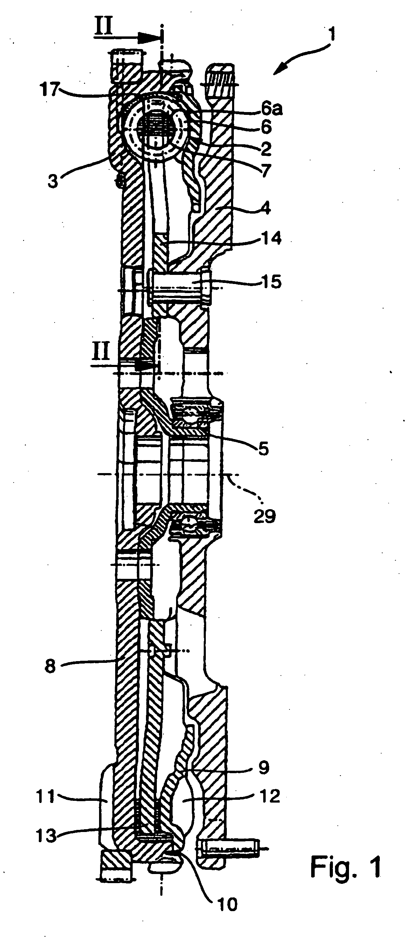

Die in den Figuren 1 bis 3 dargestellte Schwingungsdämpfungseinrichtung 1 umfasst einen Drehschwingungsdämpfer 2, der bei dem dargestellten Ausführungsbeispiel zwischen zwei Schwungradelementen 3, 4 angeordnet ist. Die beiden Schwungradelemente 3, 4 sind über eine Lagerung 5 relativ zueinander verdrehbar, zentrisch positioniert. Das Schwungradelement 3 ist beispielsweise mit der Abtriebswelle einer Brennkraftmaschine verbindbar, wohingegen das Schwungradelement 4 mit einer Getriebeeingangswelle koppelbar sein kann, beispielsweise über eine auf dem Schwungradelement 4 montierte Reibungskupplung.

Bezüglich der Lagerausbildung, des prinzipiellen Aufbaus der einzelnen Schwungradelemente, deren Verbindungsmöglichkeiten mit der Brennkraftmaschine und der Getriebeeingangswelle sowie deren Funktionsweise, wird ausdrücklich auf die DE-OS 39 09 892, die DE-OS 41 17 571 und DE-OS 41 17 579 sowie den darin diesbezüglich angeführten Stand der Technik verwiesen, so dass bezüglich dieser Punkte eine ausführliche Beschreibung in der vorliegenden Anmeldung nicht erforderlich ist und somit die diesbezüglichen Offenbarungen des Standes der Technik als in die vorliegende Anmeldung integriert, zu betrachten sind.

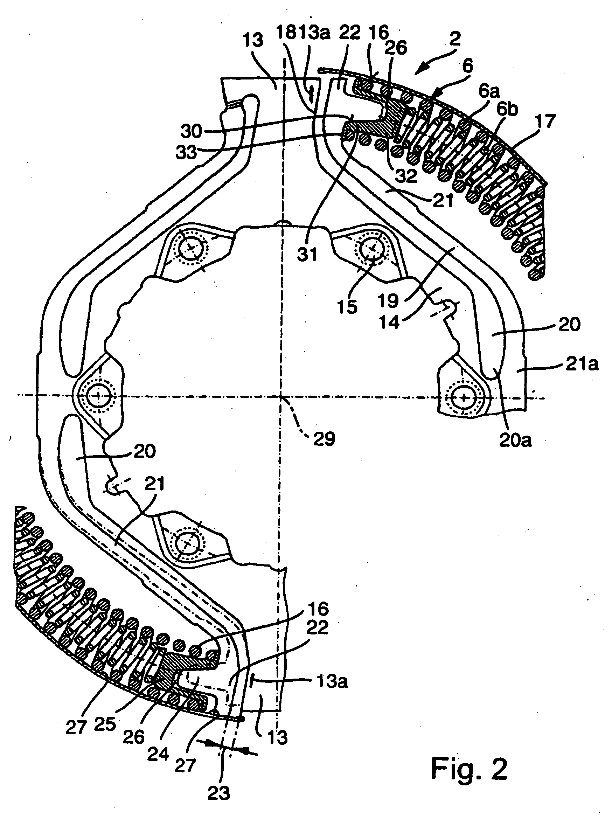

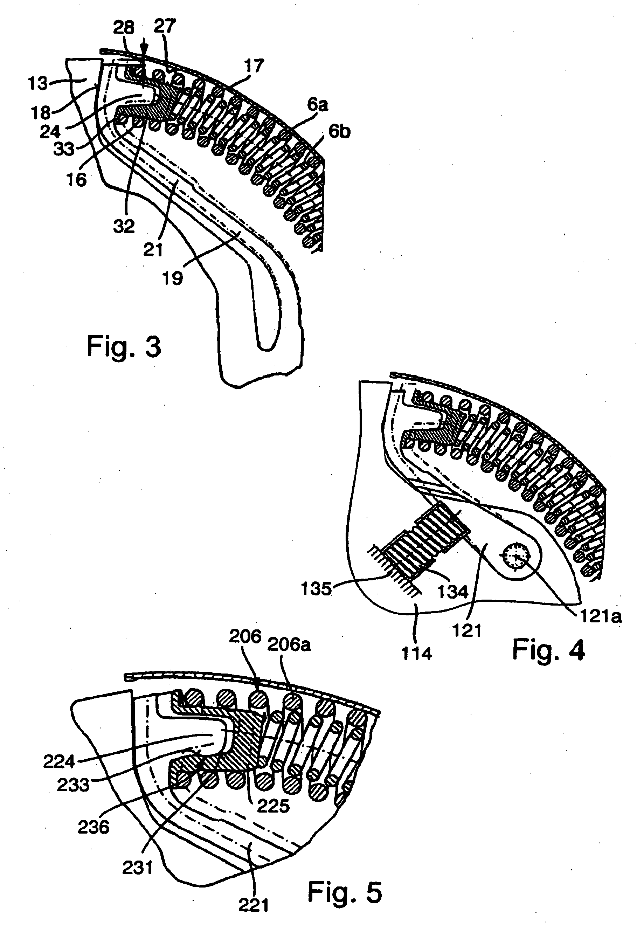

Der Drehschwingungsdämpfer 2 umfasst bei dem dargestellten Ausführungsbeispiel zwei durch Schraubenfedern gebildete Energiespeicher 6, die hier einstückig ausgebildet sind. Die Energiespeicher 6 können lediglich aus einer Feder 6a oder, wie in den Figuren 2 und 3 dargestellt, aus zumindest einer äußeren Feder 6a und wenigstens einer in dieser aufgenommenen Innenfeder 6b bestehen. Anstatt einstückige, in Umfangsrichtung längliche Schraubenfedern 6a, 6b zu verwenden, können zur Bildung von Energiespeichern auch mehrere hintereinander geschaltete Federelemente verwendet werden, wie dies beispielsweise durch die DE-OS 41 28 868 und die DE-OS 43 01 311 angeregt wurde.

Bei Verwendung von langen Schraubenfedern 6a, 6b können diese entsprechend ihrer Anordnung in der Schwingungsdämpfungseinrichtung 1 bereits vor der Montage vorgekrümmt sein. Wie aus Figur 1 ersichtlich ist, sind die Energiespeicher 6 in einem ringförmigen beziehungsweise torusartigen Raum 7 aufgenommen, der in vorteilhafter Weise, zumindest teilweise mit einem viskosen Medium, wie zum Beispiel Fett, gefüllt sein kann. Der Raum 7 ist hauptsächlich durch zwei Gehäuseteile 8, 9 gebildet, die bei dem dargestellten Ausführungsbeispiel als Blechformteile hergestellt und zumindest bezüglich der Schraubenfedern 6a schalenartig ausgebildet sind. Bei dem dargestellten Ausführungsbeispiel sind die Gehäuseteile 8, 9 mittels einer sich über den gesamten Umfang erstreckenden Schweißverbindung 10 dicht verbunden.

Der ringförmige beziehungsweise torusartige Raum 7 ist - in Umfangsrichtung betrachtet - unterteilt in einzelne Aufnahmen, in denen die Energiespeicher 6 enthalten sind. Die einzelnen Aufnahmen sind - in Umfangsrichtung betrachtet - voneinander getrennt durch Beaufschlagungsbereiche 11, 12, welche bei dem dargestellten Ausführungsbeispiel durch in die als Blechformteile ausgebildeten Gehäuseteile 8, 9 eingebrachte Anformungen, zum Beispiel taschenförmige Anprägungen, gebildet sind. Die mit dem zweiten Schwungradelement 4 verbundenen Beaufschlagungsbereiche 13 für die Energiespeicher 6 sind von einem scheibenbeziehungsweise ringartigen Bauteil 14 getragen, das hier radial innen über Nietverbindungen 15 mit dem zweiten Schwungradelement 4 verbunden ist. Die Beaufschlagungsbereiche 13 sind durch an der äußeren Kontur des scheibenartigen Bauteils 14 angeformte radiale Ausleger beziehungsweise Arme gebildet. Die Arme 13 sind bei nicht beanspruchter Schwingungsdämpfungseinrichtung 1 axial zwischen den sich axial gegenüberliegenden Beaufschlagungsbereichen 11, 12 des ersten Schwungradelementes 3 angeordnet.

Bei einer Relativverdrehung zwischen den beiden Schwungradelementen 3, 4 in Schub- oder Zugrichtung werden die Energiespeicher 6 zwischen den mit diesen zusammenwirkenden Beaufschlagungsbereichen 11, 12, 13 zumindest nach einem bestimmten Verdrehwinkel aus der in Figur 2 dargestellten Ruhestellung beziehungsweise neutralen Stellung des Drehschwingungsdämpfers 2 komprimiert. Wenigstens ein Energiespeicher 6 wird bei Zugbetrieb an einem Ende durch die Arme 13 beaufschlagt beziehungsweise abgestützt, wobei das andere Ende des Energiespeichers 6 durch die Beaufschlagungsbereiche 11, 12 beansprucht wird. Zugbetrieb bedeutet, dass der Motor ein Antriebsmoment für das Kraftfahrzeug abgibt, also der Motor das Kraftfahrzeug antreibt.

Bei Schubbetrieb wird das Ende 16 wenigstens eines Energiespeichers 6 zunächst nicht durch einen Arm 13 beaufschlagt, da zwischen dem entsprechenden Ende 16 des Energiespeichers 6 und den zugeordneten Abstützbereichen 18 eines Armes 13 eine zusätzliche Federung, die durch ein Federelement 19 aufgebracht wird, vorgesehen ist. Die Federwirkung des Federelementes 19 ist mit der Federwirkung des zugeordneten Energiespeichers 6 in Reihe geschaltet.

In dem ringförmigen Raum 7 sind Abstützschalen 17 vorgesehen, welche, wie aus den Figuren 2 und 3 zu entnehmen ist, sich zumindest über die Länge der Energiespeicher 6 erstrecken. Diese Abstützschalen sind vorzugsweise an die Kontur der Windungen der äußeren Schraubenfeder 6a angeglichen und dienen als Verschleißschutz. Hierfür sind die Abstützschalen 17 aus Federstahl bzw. gehärtetem Stahl hergestellt.

Vorzugsweise sind die Energiespeicher 6 und die Arme 13 - über den Umfang der Einrichtung betrachtet - zumindest annähernd rotationssymmetrisch angeordnet. Bei dem dargestellten Ausführungsbeispiel sind zwei Energiespeicher 6 vorgesehen, die sich annähernd über die Hälfte des Umfanges der Schwingungsdämpfungseinrichtung 1 erstrecken können. Das scheibenförmige Bauteil 14 besitzt zwei diametral gegenüberliegende Arme 13.

Bei dem in den Figuren 2 und 3 dargestellten Ausführungsbeispiel ist das Federelement 19 einstückig mit dem flansch- bzw. scheibenförmigen Bauteil 14 ausgebildet. Hierfür ist in dem scheibenförmigen Bauteil 14 ein schlitzförmiger Ausschnitt 20 eingebracht, wodurch ein armförmiges Federelement 19 gebildet wird. Die Länge des so gebildeten Armes 21 ist dabei in Bezug auf den über die Länge des Armes 21 betrachteten Querschnittverlauf derart abgestimmt bzw. bemessen, dass ein solcher Arm 21 eine als Biegebalken wirksame Feder bildet. Wie bereits erwähnt, ist die durch einen solchen Arm 21 erzeugte Federwirkung in Reihe geschaltet zu der Federwirkung eines Energiespeichers 6. Durch entsprechende Ausgestaltung des Schlitzes 20 wird zwischen dem freien Ende 22 eines Armes 21 und den Abstütz- bzw. Beaufschlagungsbereichen 18 eines Armes 13 ein definierter umfangsmäßiger Abstand 23 gebildet. Durch entsprechende Dimensionierung dieses Abstands 23 kann der wirksame Federweg eines Armes 21 bestimmt werden. Nach Überwindung des Abstands 23 infolge eines auf den entsprechenden elastischen Arm 21 einwirkenden Drehmomentes stützt sich dieser elastische Arm 21 bei dem dargestellten Ausführungsbeispiel unmittelbar an den Armbereichen 13a eines Armes 13 ab. Der Schlitz 20 ist dabei radial außen derart ausgestaltet, dass vorzugsweise zumindest partiell eine flächige Abstützung zwischen den radial äußeren Bereichen 22 eines Armes 21 und den Abstütz- bzw. Beaufschlagungsbereichen 18 des entsprechenden Armes 13 erfolgt. Das geschlossene Ende 20a eines Schlitzes 20 sowie die Übergangsbereiche 21a eines Armes 21 sind derart ausgebildet, dass sie in Bezug auf die infolge der elastischen Verformung des entsprechenden Armes 21 auftretenden Spannungen eine Dauerfestigkeit des Bauteils 14 gewährleisten.

Zweckmäßig kann es sein, wenn die Schlitze 20 derart ausgebildet sind, dass aufgrund einer elastischen Verformung eines Armes 22 ein Verdrehwinkel 23 in der Größenordnung zwischen 2° und 8° zwischen den relativ zueinander verdrehbaren Bauteilen, die hier durch die beiden Schwungradelemente 3 und 4 gebildet sind, ermöglicht wird.

Bei entsprechender Beaufschlagung eines federnden Armes 21 durch den zugeordneten Energiespeicher 6, weicht dieser in Umfangsrichtung zurück, bis dieser Arm 21 vorzugsweise mit seinen radial äußeren Bereichen 22 an den Abstütz- bzw. Beaufschlagungsbereichen 18 zur Anlage kommt.

Wie aus den Figuren 2 und 3 zu entnehmen ist, besitzen die Arme 21 an ihrem radial äußeren Bereich 22 eine Anformung 24, welche bei dem dargestellten Ausführungsbeispiel unter Zwischenlegung eines Federnapfes 25 mit dem entsprechend zugeordneten Ende 16 eines Energiespeichers 6 derart zusammenwirkt, dass dieser Endbereich 16 entgegen der auf diesen einwirkenden Fliehkraft radial abgestützt werden kann.

Bei dem dargestellten Ausführungsbeispiel ist diese Anformung 24 durch einen sich in Umfangsrichtung erstreckenden Zapfen bzw. durch eine Nase 24 gebildet, welche in eine umfangsmäßige Vertiefung bzw. Ausnehmung 26 eines Federnapfes 25 eingreifen kann. Die jeweilige Nase 24 und die zugeordnete Ausnehmung 26 sind in Bezug zueinander derart ausgebildet und angeordnet, dass zumindest bei einer elastischen Verformung des entsprechenden Armes 21 der Energiespeicher 6 gegenüber den radial äußeren Bereichen 27, an denen sich die Windungen der Schraubenfeder 6a unter Fliehkrafteinwirkung abstützen, zurückgehalten bzw. abgehoben wird. Ein entsprechender Abhub 28 ist aus Figur 3 zu entnehmen.

Wie aus einem Vergleich der Figuren 2 und 3 ersichtlich ist, befindet sich in Figur 3 der elastische Arm 21 in einem verspannten Zustand und stützt sich in Umfangsrichtung an den Konturen 18 eines Armes 13 ab. Das radiale Zurückziehen des Endes 16 der Feder 6a wird durch entsprechende Formgebung des Armes 21 gewährleistet. Diese Verformung erfolgt derart, dass infolge der stattfindenden Verschwenkung bzw. Biegung des Armes 21 eine radiale Verlagerung der entsprechenden Nase 24 in Richtung der Rotationsachse 29 des Systems erfolgt.

Wie unter anderem aus Figur 2 ersichtlich ist, bildet der radial innere Bereich einer Nase 24 eine auflauframpenähnliche Schräge 30, die mit einem Abstützbereich 31 eines Federnapfes 25 zusammenwirkt. Durch die Schräge 30 und die mit dieser zusammenwirkenden Gegenkontur 31 wird ein einwandfreies Einfädeln der Nase 24 in die Ausnehmung 26 gewährleistet.

Die Konturen einer Nase 24 und der zugeordneten Ausnehmung 26 können in Bezug aufeinander derart ausgebildet sein, dass bereits beim Einfädeln der Nase 24 in die Ausnehmung 26 eine gewisse radiale Verlagerung des entsprechenden Federendes 16 erfolgen kann. Zweckmäßig kann es jedoch auch sein, wenn die vorerwähnten Konturen und Gegenkonturen derart aufeinander abgestimmt sind, dass zunächst praktisch ein vollständiges Einfädeln einer Nase 24 in die entsprechende Ausnehmung 26 erfolgen kann, ohne dass das entsprechende Federende 16 radial nach innen gezogen wird. Dadurch wird gewährleistet, dass ein radiales Zurückziehen des entsprechenden Federendes 16 lediglich aufgrund der durch Beaufschlagung des zugeordneten Federarmes 21 erfolgenden Verformung dieses Armes 21 stattfindet.

Das vorerwähnte radiale Zurückziehen der Federenden 16 hat den Vorteil, dass auch bei höheren Drehzahlen zumindest die Endbereiche, das bedeutet also, einige Windungen des Energiespeichers bzw. hier der äußeren Schraubenfeder 6a, außen außer Kontakt mit anderen Bauteilen bzw. Bereichen gehalten werden, so dass diese Federwindungen frei federn können, das bedeutet also praktisch keine Reibungsdämpfung erzeugen.

Weiterhin kann durch die Wirkung der Arme 21 bzw. der Nasen 24 gewährleistet werden, dass auch in Drehzahlbereichen, in denen die normalerweise vorhandene Reibung zwischen den Windungen einer äußeren Schraubenfeder 6a und ihrer radialen Abstützfläche 27 derart groß ist, dass die Endwindungen nicht mehr federn können, zumindest ein Endbereich einer Schraubenfeder 6a noch eine Elastizität bzw. Federung aufweist. Dies ist insbesondere vorteilhaft, um die in diesen Drehzahlbereichen auftretenden, hochfrequenten Schwingungen mit kleiner Winkelamplitude zu dämpfen.

Wie aus den Figuren 2 und 3 zu entnehmen ist, wird die die radial innerhalb der äußeren Schraubenfeder 6a angeordnete innere Schraubenfeder 6b ebenfalls mittels zumindest eines Federnapfes 25 beaufschlagt. Hierfür besitzt der jeweilige Federnapf 25 einen sich in Umfangsrichtung in den Endbereich der entsprechenden Feder 6a hinein erstreckenden Ansatz 32, welcher auch eine Ausnehmung 26 begrenzt.

Bei dem dargestellten Ausführungsbeispiel ist der jeweilige Federnapf 25 derart ausgebildet, dass dessen Ansatz 32 an seinem den äußeren Bereichen 22 eines Armes 21 zugewandten Ende einen ringförmigen, radialen Kragen 33 aufweist, an dem das zugeordnete Ende einer Feder 6a sich in Umfangsrichtung abstützt.

Wie aus Figur 3 zu entnehmen ist, können einige der gegenüber der äußeren Abstütz- bzw. Führungsfläche 27 abgehobenen Windungen der äußeren Feder 6a sich unter Fliehkrafteinwirkung an dem Ansatz 32 des entsprechenden Federnapfes 25 radial abstützen, wodurch wiederum eine gewisse Reibung zwischen diesen Federwindungen und dem Ansatz 32 entsteht. Durch entsprechende Wahl des den axialen Ansatz 32 bildenden Materials und/oder durch eine entsprechende Beschichtung kann die dadurch entstehende Reibungsdämpfung jedoch kleiner gehalten werden, als diejenige, welche durch Abstützung dieser Windungen an der Fläche 27 entstehen würde.

Die radiale Verlagerung eines Federendes mittels eines verschwenkbaren Armes kann, wie bereits erwähnt, für diejenigen Federenden in vorteilhafter Weise Verwendung finden, welche durch den Flansch 14 bei Schubbetrieb beaufschlagt werden. Das radiale Zurückziehen von Federenden mittels verschwenkbarer Arme kann jedoch auch für diejenigen Federenden Anwendung finden, welche durch den Flansch 14 bei Zugbetrieb beaufschlagt werden. Weiterhin kann es zweckmäßig sein, wenn beide Federenden einer Feder 6a in radialer Richtung durch verschwenkbare Arme 21 radial nach innen ziehbar sind.

Bei der Ausgestaltung gemäß den Figuren 2 und 3 besitzt ein Arm 21 eine in Umfangsrichtung gerichtete Anformung 24, welche in eine Ausnehmung 26 eines Federnapfes 25 einläuft. Zweckmäßig kann es jedoch auch sein, wenn der Federnapf 25 eine in Umfangsrichtung angeformte, für den Zweck entsprechend ausgebildete Anformung besitzt, welche in eine Aussparung im Bereich eines Armes 21 eingreift, um die gewünschte radiale Verlagerung des entsprechenden Federendes zu gewährleisten.

In vorteilhafter Weise ist ein entsprechender federnder Arm 21 derart bezüglich seiner Form und seiner Federeigenschaften ausgebildet, dass dieser unter Fliehkrafteinwirkung nicht an der Fläche 27 zur Anlage kommt. Um eine derartige Anlage zu verhindern, kann es auch zweckmäßig sein, wenn zusätzliche Mittel vorgesehen werden, die eine derartige Abstützung verhindern. Dies kann beispielsweise durch einen Anschlag erfolgen, der mit dem Flansch 14 fest verbunden ist und eine unzulässige elastische Verformung des entsprechenden Armes 21 radial nach außen hin verhindert.

Obwohl bei dem dargestellten Ausführungsbeispiel die dargestellten Hebelarme 21 einstückig mit dem die Beaufschlagungsbereiche 13 bildenden Flansch 14 ausgebildet sind, können derartige federnde Arme 21 auch durch ein zusätzliches Bauteil gebildet werden. Dies kann in ähnlicher Weise erfolgen, wie dies beispielsweise in der DE 44 33 467, insbesondere in Zusammenhang mit den Figuren 1 bis 4 oder in der DE 101 19 878, insbesondere in Zusammenhang mit den Figuren 1 bis 5, beschrieben wurde.

Bei der in Figur 4 dargestellten erfindungsgemäßen Ausführungsform ist der verschwenkbare Hebel 121 durch wenigstens ein separates Bauteil gebildet, welches um eine Drehachse 121 a verschwenkbar gelagert ist. Bei dem dargestellten Ausführungsbeispiel ist der Hebel 121 auf dem flanschförmigen Bauteil 114 verschwenkbar gelagert. Der Hebelarm 121 kann entgegen der Wirkung eines Energiespeichers, der hier durch eine Schraubenfeder 134 symbolisiert ist, verschwenkt werden. In Figur 4 ist ein Betriebszustand dargestellt, welcher dem in Figur 3 dargestellten entspricht.

Der Energiespeicher 134 kann sich an einem mit dem Flansch 114 verbundenen Bereich 135 abstützen. Dieser Bereich 135 kann jedoch auch an einem anderen Bauteil, welches drehfest mit dem Flansch 114 ist, vorgesehen sein.

Anstatt einer Schraubenfeder 134 könnte auch zumindest eine Schenkelfeder oder Blattfeder Verwendung finden. Der eine Schenkel einer derartigen Feder kann dabei beispielsweise drehfest in einer entsprechenden Öffnung des Flansches 114 eingehängt sein, wohingegen der andere Schenkel einen Verdrehwiderstand dem Hebel 121 entgegensetzt. Um eine unzulässig große Verschwenkung des Hebels 121 radial nach außen hin zu vermeiden, kann, wie bereits erwähnt, ein entsprechender Anschlag, zum Beispiel am Flansch 114, vorgesehen werden. Ein derartiger Anschlag kann beispielsweise durch eine einstückig mit dem Flansch 114 ausgestaltete Nase gebildet sein, welche einen axialen Bereich aufweist, an dem sich der Hebel 121 abstützen kann. Auch könnte der Hebel 121 einen axial hervorstehenden Vorsprung besitzen, der in eine entsprechend ausgebildete, die notwendige Verschwenkung des Armes 121 gewährleistende Ausnehmung eingreift. Eine derartige Nase bzw. Ausnehmung könnte beispielsweise in den sich axial überlappenden Bereichen des Hebels 121 und des Flansches 114 vorgesehen werden.

Die zur tendenzmäßigen Verschwenkung eines Hebelarmes 21 bzw. 121 erforderliche Kraft kann auch durch entsprechende massenmäßige Ausgestaltung eines derartigen Hebelelementes beeinflusst werden.

In besonders vorteilhafter Weise kann der einem Ende eines Energiespeichers 6 zugeordnete Federnapf 25 verliersicher bzw. fest mit dem entsprechenden Ende des Energiespeichers verbunden sein. Dies kann beispielsweise mittels einer formschlüssigen Verbindung erfolgen, die als Schnappverbindung ausgebildet sein kann. Diesbezüglich wird beispielsweise auf die DE 196 03 248 A1 verwiesen. Eine derartige Verbindung kann zwischen dem entsprechenden Federnapf und der äußeren Schraubenfeder 6a und/oder, sofern eine Innenschraubenfeder 6b vorhanden ist, zwischen diesem Federnapf und dieser inneren Schraubenfeder 6b vorhanden sein.

Gemäß einer Weiterbildung der Erfindung kann, wie dies in Figur 5 in vergrößertem Maßstab dargestellt ist, eine gewisse Rasterwirkung bzw. eine formschlüssige Verbindung nach dem Einfädeln einer Nase 224 in den entsprechenden Federnapf 225 vorhanden sein. Bei dem dargestellten Ausführungsbeispiel wird eine derartige Verbindung mittels einer Rastverbindung 236 gewährleistet. Hierfür ist die Auflauframpe 233 der Nase 224 und die mit dieser zusammenwirkenden Gegenkontur 231 des Federnapfes 225 entsprechend abgestuft ausgebildet, so dass die dadurch gebildeten Konturen sich - in Umfangsrichtung betrachtet - radial hintergreifen, wodurch ein gewisser Formschluss entsteht. Durch entsprechende Ausgestaltung des zwischen den Abstufungen vorhandenen Übergangsbereiches kann die zur Entriegelung dieser Verbindung notwendige, umfangsmäßige Kraft beeinflusst werden.

Eine derartige kräftemäßig begrenzte Verriegelung zwischen einem verschwenkbaren Arm 221 und dem entsprechenden Ende eines Energiespeichers 206 bzw. einem Federnapf 225 ermöglicht auch eine Beanspruchung des entsprechenden Energiespeichers bzw. der diesen bildenden Schraubenfeder 206a auf Zug. Das über eine derartige Rasterung 236 übertragbare Drehmoment ist, wie bereits erwähnt, abhängig von der durch eine derartige Rasterung 236 sichergestellten, kräftemäßigen Verbindung zwischen den entsprechenden Bauteilen bzw. Bereichen 221, 225 und 206a.

Aufgrund der auf den Energiespeicher, der wenigstens aus einer Schraubendruckfeder 206a besteht, einwirkenden Fliehkraft ist die zur Lösung einer derartigen Rasterverbindung 236 notwendige Kraft ebenfalls Fliehkraft, also drehzahlabhängig.

Die in den Figuren 2 bis 5 dargestellten Ausführungsformen haben weiterhin den Vorteil, dass während des radialen Einziehens des Energiespeicherendes 16 keine Relativbewegung zwischen Federnapf 25 und dem Hebelarm 21 bzw. der Nase 24 stattfindet, wodurch ein diesbezüglicher Verschleiß vermieden werden kann.

Die erfindungsgemäße Ausgestaltung ermöglicht weiterhin, durch geeignete Abstimmung der Masse bzw. Massenverteilung eines Hebels 121 ein drehzahlabhängiges Moment zwischen dem entsprechenden Hebel und dem zugeordneten Energiespeicherende aufzubauen, welches durch die während der Kompression eines Energiespeichers auftretende Umfangskraft überwunden werden muss. Es kann also der Abhebeverlauf eines Energiespeicherendes 16 als Funktion vom anliegenden Torsionsmoment bzw. Motormoment und zugehöriger Drehzahl gesteuert werden.

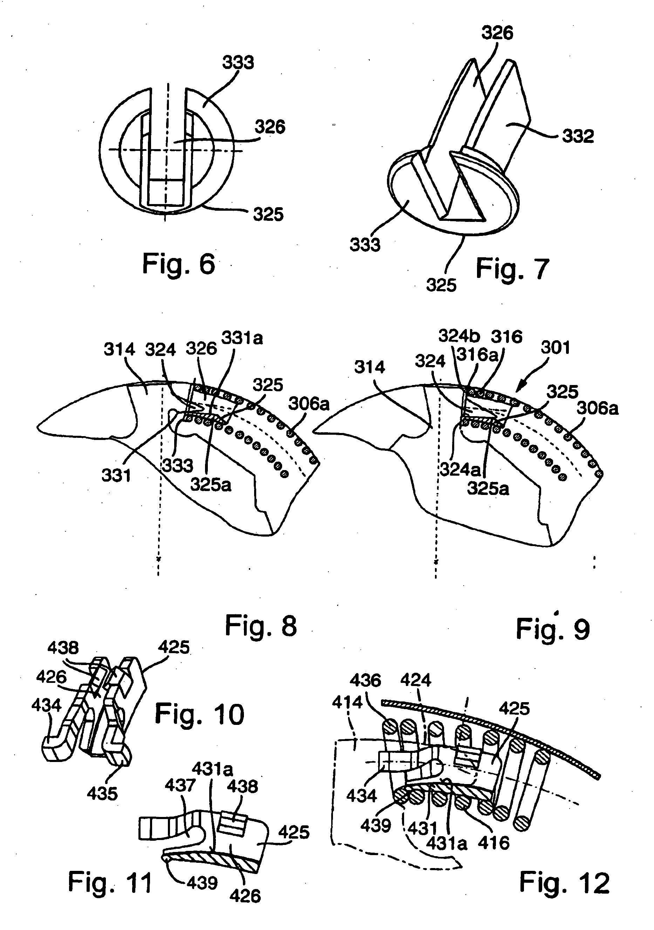

Der in den Figuren 6 bis 9 dargestellte Federnapf 325 unterscheidet sich gegenüber den bisher beschriebenen Federnäpfen im Wesentlichen dadurch, dass der Freiraum bzw. die Ausnehmung 326 zur Aufnahme einer radialen Abstütznase 324 radial nach außen hin zumindest über eine Teilstrecke seiner umfangsmäßigen Erstreckung radial nach außen hin offen ist. Wie insbesondere aus den Figuren 6 und 7 ersichtlich ist, ist der Freiraum bzw. die Ausnehmung 326 schlitz- bzw. kanalartig ausgebildet und bei dem dargestellten Ausführungsbeispiel über die gesamte umfangsmäßige Erstreckung radial nach außen hin offen. Es sind jedoch auch Ausführungsbeispiele denkbar, bei denen, ausgehend von dem Endkragen 333, sich der Freiraum 326 lediglich über einen Teilbereich des sich in ein Federende eingreifenden Ansatzes 332 erstreckt. Auch kann, sofern die umfangsmäßige Erstreckung des Ansatzes 332 größer ist als die entsprechende Erstreckung der in diesen eingreifenden Nase 324, der dem Kragen 333 abgewandte Endbereich eines Ansatzes 332 bzw. Freiraumes 326 geschlossen sein, wodurch eine stabilere Ausgestaltung eines Federnapfes 325 gewährleistet wird.

Der Kragen 333 dient, wie dies bereits in Zusammenhang mit den anderen Federnäpfen beschrieben wurde, zur Abstützung eines Federendes.

Aus Figur 8 und 9 ist ersichtlich, dass die Nase 324 und die an den Freiraum 326 angrenzenden, radial inneren Abschnitte 325a eines Federnapfes 325 entsprechend aufeinander abgestimmte Rampen bzw. Gegenrampen 331, 331a bilden, welche derart zusammenwirken, dass bei Kompression der entsprechenden Feder 306a mittels eines die Nase 324 tragenden Flansches 314 das entsprechende Federende 316 radial nach innen gezogen wird, in ähnlicher Weise, wie dies in Zusammenhang mit den Figuren 1 bis 5 beschrieben wurde. Dadurch soll ebenfalls eine freie Federung des entsprechenden Federendes 316 gewährleistet werden.

Bei der in den Figuren 8 und 9 dargestellten Ausführungsform ist die Nase 324 starr mit dem Flansch 314 ausgebildet. Eine derartige Nase kann jedoch auch in ähnlicher Weise, wie dies in Zusammenhang mit den Figuren 1 bis 5 beschrieben wurde, an einem verschwenkbaren Arm 121 angeformt sein, welcher von einem entsprechenden Flansch bzw. scheibenförmigen Bauteil getragen wird.

Eine zumindest partielle Öffnung der Ausnehmung bzw. des Freiraumes 326 ermöglicht eine freiere Gestaltung der Nase 324, da zumindest in den dem Kragen 333 angrenzenden Abschnitten eines Ansatzes 332 die Nase 324 in radialer Richtung breiter ausgestaltet werden kann und somit, zumindest in diesem Bereich, eine höhere Biegesteifigkeit besitzen kann. Man bekommt also durch eine entsprechende Ausgestaltung eines Federnapfes 325 zusätzlichen radialen Platz für eine Nase 324, wodurch längere Nasen 324 bei zumindest gleicher Festigkeit möglich sind. Die erfindungsgemäße Ausgestaltung eines Federnapfes 325 ermöglicht aber auch, die radial inneren, mit einer Nase 324 zusammenwirkenden Abstützbereiche 325a eines Napfes 325 bezüglich der Materialstärke dicker auszubilden, wodurch die Festigkeit des Napfes gegen Fliehkräfte, welche durch die Feder 306a auf diesen ausgeübt werden, verbessert werden kann.

Durch die geschaffene Möglichkeit, längere Abstütznasen 324 zu verwenden, können auch Federnäpfe 325 mit längeren Ansätzen 332 eingesetzt werden. Dadurch kann die radiale Abstützung einer größeren Anzahl von Federwindungen gewährleistet werden. Wie aus Figur 8 ersichtlich ist, können im entspannten Zustand der Feder 306a zumindest fünf Federendwindungen durch den Napf 325 abgestützt werden.

Durch entsprechende Anpassung bzw. Ausgestaltung der mit einer Feder 306a zusammenwirkenden radialen Abstützkonturen eines Federnapfes 325 können auch die in den Wndungen eines Endbereiches einer Feder 306a entstehenden Spannungen auf ein zulässiges Maß begrenzt werden. Durch entsprechende Formgebung bzw. Ausgestaltung der Abstützkontur eines Napfes 325 kann also der radiale Biegeverlauf unter Fliehkrafteinwirkung der einen Endbereich bildenden Windungen einer Feder 306a bestimmt werden.

Wie insbesondere aus Figur 9 zu entnehmen ist, sind die radial innerhalb einer Nase 324 vorhandenen Federbeaufschlagungsbereiche 324a des Flansches 314 und die radial außerhalb der Nase 324 vorhandenen Federbeaufschlagungsbereiche 324b in Umfangsrichtung der Dämpfungseinrichtung 301 zueinander versetzt angeordnet. Bei dem dargestellten Ausführungsbeispiel ist dieser Versatz zwischen den Beaufschlagungsbereichen 324a und 324b derart bemessen, dass diese praktisch gleichzeitig einerseits an dem Kragen 333 des Federnapfes 325 und andererseits an der Endwindung 316a der Feder 316 zur Anlage kommen.

Vorteilhaft kann es jedoch sein, wenn der Kragen 333 auch im Bereich des radial inneren Beaufschlagungsbereiches 324a des Flansches 314 unterbrochen bzw. zurück versetzt ist in Umfangsrichtung, und zwar derart, dass dadurch eine unmittelbare Abstützung der Endwindung 316a an dem Bereich 324a des Flansches gewährleistet wird. Bei einer derartigen Ausgestaltung können dann die Beaufschlagungsbereich 324a, 324b des Flansches 314, in radialer Richtung betrachtet, ausgerichtet sein.

Das in den Figuren 10 bis 12 dargestellte Abstützelement 425 ermöglicht ebenfalls eine radiale Abstützung der Endwindungen eines Federendes 416 in ähnlicher Weise, wie dies in Zusammenhang mit dem Federnapf 325 beschrieben wurde. Wie aus Figur 12 ersichtlich ist, sind bei dem dargestellten Ausführungsbeispiel die als Rampen und Gegenrampen wirksamen Flächen 431 der Flanschnase 424 und 431 a des Abstützelementes 425 derart aufeinander abgestimmt, dass während der Eintauchphase der Flanschnase 424 in das im Querschnitt U-förmig ausgebildete Abstützelement 425 stets eine flächige Berührung zwischen den beiden Flächen 431 und 431 a vorhanden ist. Dadurch kann der an diesen Flächen auftretende Verschleiß wesentlich reduziert werden. Bei dem dargestellten Ausführungsbeispiel sind die Flächen 431 und 431 a bogenartig ausgebildet und in Bezug auf die Rotationsachse der Schwingungsdämpfungseinrichtung entsprechend ausgestaltet, um die flächige Berührung zu gewährleisten.

Obwohl es zweckmäßig sein kann, wenn das Abstützelement 425 aus einem hochfesten Kunststoff besteht, eignet sich die dargestellte Ausführungsform für eine Herstellung aus Blechmaterial. Um entsprechende Gleiteigenschaften, insbesondere im Bereich der Fläche 431 a zu gewährleisten, kann das Blech bzw. das Abstützelement 425 zumindest an dieser Fläche 431 a mit einem Gleitmaterial beschichtet sein. Weiterhin kann es besonders zweckmäßig sein, wenn das Abstützelement 425 zumindest im Bereich der Fläche 431 a gehärtet ist. Die Herstellung von Elementen 425 aus Blech hat den Vorteil, dass diese durch einfaches Umformen, also ohne Zerspanung, hergestellt werden können. Dies ermöglicht eine kostengünstige Herstellung derartiger Abstützelemente.

Das Abstützelement 425 ist, wie bereits erwähnt, im Querschnitt U-förmig ausgestaltet und besitzt zwei Laschen bzw. Zungen 434, 435, die seitlich hervorstehen. Diese Zungen 434, 435 stützen sich an der Endwindung 436 der entsprechenden Feder ab, wie dies aus Figur 12 zu entnehmen ist. Die Bereiche 434, 435 dienen gleichzeitig zur Beaufschlagung des Federendbereiches 416.

Zur Reduzierung der Materialbeanspruchung aufgrund von internen Spannungen, die durch die radiale Abstützung und die Beaufschlagung des entsprechenden Federendes 416 im Element 425 auftreten, besitzt dieses Abstützelement 425 entsprechende Freischnitte 437.

Wie in Verbindung mit den Figuren 10 und 11 ersichtlich, besitzt ein Abstützelement 425 Anformungen 438, die hier durch laschenförmige Bereiche 438 gebildet sind, welche in Bezug auf die übrigen Bereiche eines Abstützelementes 425 derart verformt sind, dass sie in den durch die U-förmige Gestalt des Abstützelementes 425 gebildeten Freiraum 426 hineinragen. Die Bereiche 438 bilden dabei Abstützflächen, an denen die Nase 424 des Flansches 414 mit einer Gegenfläche, die beispielsweise durch eine Abstufung gebildet sein kann, zur Anlage kommt.

Wie insbesondere aus den Figuren 11 und 12 noch zu entnehmen ist, besitzt ein Abstützelement 425 eine Anformung 439, die hier eine radial nach innen gerichtete Nase 439 bildet. Diese Anformung 439 greift, wie dies aus Figur 12 entnehmbar ist, zwischen zwei Windungen des Federendes 416 ein, wodurch eine Verliersicherung zwischen dem entsprechenden Federende 416 und dem zugeordneten Abstützelement 425 gewährleistet ist.

Die Ausführungsbeispiele sind nicht als Einschränkung der Erfindung zu verstehen.

### Bezugszeichenliste

- 1: Schwingungsdämpfungseinrichtung
- 2: Drehschwingungsdämpfer
- 3, 4: Schwungradelemente
- 5: Lagerung
- 6: Energiespeicher
- 6a, 6b: Schraubenfedern
- 7: torusartiger Raum
- 8, 9: Gehäuseteile
- 10: Schweißverbindung
- 11, 12, 13, 13a: Beaufschlagungsbereiche
- 14: scheibenartiges Bauteil
- 15: Nietverbindungen
- 16: Ende
- 17: Abstützschalen
- 18: Abstützbereiche
- 19, 19a: Federelement
- 20, 20a: Schlitz
- 21, 21 a: Arm
- 22: freies Ende
- 23: Verdrehwinkel
- 24: Anformung
- 25: Federnapf
- 26: Ausnehmung
- 27: Bereiche
- 28: Abhub
- 29: Rotationsachse
- 30: Schräge
- 31: Abstützbereich
- 32: Ansatz
- 33: Kragen
- 114: Bauteil
- 121: Hebel
- 121a: Drehachse
- 134: Schraubenfeder
- 135: Bereich
- 206: Energiespeicher
- 206a: Schraubendruckfeder
- 221: verschwenkbarer Arm
- 224: Nase
- 225: Federnapf
- 231: Gegenkontur
- 233: Auflauframpe
- 236: Rasterverbindung
- 306a: Feder
- 314: Flansch
- 316, 316a: Federende
- 324: Abstütznase
- 324a, 324b: Beaufschlagungsbereiche
- 325: Federnapf
- 325a: Abschnitte
- 326: Ausnehmung
- 331, 331a: Gegenrampen
- 332: Ansatz
- 333: Endkragen
- 414: Flansch
- 416: Federende
- 424: Flanschnase
- 425: Abstützelement
- 431, 431 a: Flächen
- 434, 435: Laschen bzw. Zungen
- 436: Endwindung
- 437: Freischnitte
- 438, 439: Anformungen

## Patentansprüche

1. Torsionsschwingungsdämpfer mit einem Eingangsteil und einem Ausgangsteil, die entgegen der Wirkung von zwischen diesen wirksamen Energiespeichern zueinander verdrehbar sind, wobei die Energiespeicher wenigstens eine im Wesentlichen in Umfangsrichtung des Dämpfers angeordnete, zusammendrückbare Schraubenfeder aufweisen, weiterhin wenigstens ein in Umfangsrichtung verschwenkbares Hebelelement von einem der Teile getragen ist, wobei sich am Hebelelement zumindest bei einer Relativverdrehung zwischen Eingangsteil und Ausgangsteil die Schraubenfeder mit einem ihrer umfangsmäßigen Enden derart abstützen kann, dass es infolge der Relativverdrehung gegenüber dem dieses tragenden Teil verschwenkt wird, wobei das Hebelelement Konturen aufweist, welche mit am zugeordneten Ende der Schraubenfeder vorgesehenen Gegenkonturen derart zusammenwirken, dass zumindest ein Endabschnitt der Schraubenfeder während der umfangsmäßigen Verschwenkung des Hebelelementes entgegen der auf diesen Federabschnitt einwirkenden Fliehkraft radial zurückgehalten wird, wobei das Hebelelement am Eingangsteil und/oder Ausgangsteil verschwenkbar gelagert ist und entgegen der Wirkung eines zusätzlichen vom Hebelelement separaten Energiespeichers um seine Lagerung verschwenkbar ist.

2. Torsionsschwingungsdämpfer nach Anspruch 1, **dadurch gekennzeichnet, dass** das Eingangsteil oder Ausgangsteil durch ein flanschförmiges Bauteil gebildet ist, welches das wenigstens eine Hebelelement trägt.

3. Torsionsschwingungsdämpfer nach einem der Ansprüche 1 bis 2, **dadurch gekennzeichnet, dass** das entgegen einer Federvvirkung verschwenkbare Hebelelement und die Schraubenfeder zwischen Eingangsteil und Ausgangsteil wirkungsmäßig in Reihe geschaltet sind.

4. Torsionsschwingungsdämpfer nach einem der Ansprüche 1 bis 3, **dadurch gekennzeichnet, dass** sich die Schraubenfeder in Umfangsrichtung des Torsionsschwingungsdämpfers erstreckt und innerhalb des Torsionsschwingungsdämpfers eine fliehkraftabhängige, der Federvvirkung der Schraubenfeder parallel geschaltete Reibung erzeugt, wodurch der durch die Schraubenfeder insgesamt erzeugte, dynamische Verdrehwiderstand drehzahlabhängig ist.

5. Torsionsschwingungsdämpfer nach einem der Ansprüche 1 bis 4, **dadurch gekennzeichnet, dass** das Ausgangsteil oder Eingangsteil eine die Schraubenfeder axial übergreifende Wandung aufweist, an der sich die Schraubenfeder entweder unmittelbar mittels ihrer Windungen oder mittelbar über zwischengelegte Abstützteile zumindest unter Fliehkrafteinwirkung abstützt.

6. Torsionsschwingungsdämpfer nach einem der Ansprüche 1 bis 5, **dadurch gekennzeichnet, dass** die Schraubenfeder zumindest an ihrem mit einem Hebelelement zusammenwirkenden Ende eine Zwischenlage trägt, welche die Gegenkonturen bildet, die mit den Konturen des Hebelelementes zusammenwirken.

7. Torsionsschwingungsdämpfer nach einem der Ansprüche 1 bis 6, **dadurch gekennzeichnet, dass** das Hebelelement derart verschwenkbar ist, dass dessen Rückhaltekonturen während der Verschwenkung auf einer Bewegungsbahn verlagert werden, die gegenüber der Rotationsachse der Dämpfungseinrichtung einen sich verändernden Abstand aufweist.

8. Torsionsschwingungsdämpfer nach Anspruch 1 bis 7, **dadurch gekennzeichnet, dass** das Hebelelement derart verschwenkbar ist, dass, bei einer Verschwenkung des Hebelelementes infolge einer umfangsmäßigen Beaufschlagung durch die Schraubenfeder, die Abstützkonturen des Hebelelementes entlang einer Bewegungsbahn derart verlagert werden, dass deren Abstand von der Rotationsachse des Torsionsschwingungsdämpfers kleiner wird, wodurch das entsprechende Federende in Richtung der Rotationsachse gedrängt wird.

9. Torsionsschwingungsdämpfer nach einem der Ansprüche 1 bis 8, **dadurch gekennzeichnet, dass** die Konturen des Hebelelementes zumindest durch eine sich in Umfangsrichtung erstreckende, nasenförmige Anformung gebildet ist.

10. Torsionsschwingungsdämpfer nach einem der Ansprüche 1 bis 9, **dadurch gekennzeichnet, dass** die am entsprechenden Federende vorgesehenen Gegenkonturen durch eine Ausnehmung einer am entsprechenden Federende vorgesehenen Zwischenlage gebildet ist.

## Claims

1. Torsion vibration damper, having an input part and an output part which can be twisted toward each other against the influence of energy storage devices acting between them, the energy storage devices having at least one compressible coil spring situated essentially in the circumferential direction of the damper, furthermore at least one lever element that can be swiveled in the circumferential direction, being supported by one of the parts, where at least when there is a relative twisting between input part and output part the coil spring can be braced by one of its circumferential ends against the lever element in such a way that as a result of the relative twisting it is swiveled in relation to the part supporting the latter, wherein the lever element has contours which interact with opposing contours provided on the corresponding end of the coil spring in such a way that during the circumferential swiveling of the lever element at least an end section of the coil spring is restrained radially against the centrifugal force acting on this section of the spring, wherein the lever element is swivel-mounted on the input part and/or output part and can be swiveled around its mounting against the influence of an additional energy storage device which is separate from the lever element.

2. Torsion vibration damper according to Claim 1, **characterized in that** the input part or output part is formed by a flange-shaped component which carries the at least one lever.

3. Torsion vibration damper according to either of Claims 1 and 2, **characterized in that** the lever element which can be rotated against the influence of a spring and the coil spring are connected effectively in series between input part and output part.

4. Torsion vibration damper according to one of Claims 1 through 3, **characterized in that** the coil spring extends in the circumferential direction of the torsion vibration damper and produces within the torsion vibration damper a friction that is dependent on the centrifugal force and acts parallel to the spring effect of the coil spring, as a result of which the total dynamic resistance to twisting produced by the coil spring is dependent on the speed of rotation.

5. Torsion vibration damper according to one of Claims 1 through 4, **characterized in that** the output part or input part has a wall partition that overlaps the coil spring axially, on which the coil spring bears either directly by means of its coils or indirectly through interposed support pieces, at least under the influence of centrifugal force.

6. Torsion vibration damper according to one of Claims 1 through 5, **characterized in that** the coil spring carries, at least on its end that interacts with a lever element, an intermediate layer which forms the opposing contours that interact with the contours of the lever element.

7. Torsion vibration damper according to one of Claims 1 through 6, **characterized in that** the lever element can be swiveled in such a way that its retaining contours are moved during the swiveling on a trajectory that is at a changing distance from the axis of rotation of the damping device.

8. Torsion vibration damper according to Claims 1 through 7, **characterized in that** the lever element can be swiveled in such a way that when the lever element is swiveled as a result of a circumferential application of force by the coil spring, the support contours of the lever element are moved along a trajectory in such a way that their distance from the axis of rotation of the torsion vibration damper becomes smaller, which causes the corresponding end of the spring to be forced in the direction of the axis of rotation.

9. Torsion vibration damper according to one of Claims 1 through 8, **characterized in that** the contours of the lever element are formed at least by a nose-shaped molded-on part that extends in the circumferential direction.

10. Torsion vibration damper according to one of Claims 1 through 9, **characterized in that** the opposing contours provided on the corresponding spring end are formed by a recess in an intermediate layer provided on the corresponding spring end.

## Revendications

1. Amortisseur de vibrations de torsion avec une partie d'entrée et une partie de sortie, qui peuvent tourner l'une par rapport à l'autre dans le sens contraire à l'effet d'accumulateurs d'énergie efficaces entre ces parties, les accumulateurs d'énergie présentant au moins un ressort hélicoïdal compressible et disposé largement dans le sens périphérique de l'amortisseur, également au moins un élément de levier basculant dans le sens périphérique étant porté par l'une des pièces, le ressort hélicoïdal pouvant s'appuyer par l'une de ses extrémités côté pourtour sur l'élément de levier au moins lors d'une rotation relative entre la partie d'entrée et la partie de sortie de telle sorte qu'il est basculé du fait de la rotation relative par rapport à la partie portant cet élément, l'élément de levier présentant des contours qui coopèrent avec des contre-contours prévus sur l'extrémité attribuée du ressort hélicoïdal de telle sorte qu'au moins un tronçon d'extrémité du ressort hélicoïdal est retenu en arrière radialement pendant le basculement côté pourtour de l'élément de levier contrairement à la force centrifuge agissant sur ce tronçon de ressort, l'élément de levier étant logé de façon à pouvoir basculer sur la partie d'entrée et/ou la partie de sortie et pouvant être basculé autour de son logement dans le sens contraire à l'effet d'un accumulateur d'énergie supplémentaire distinct de l'élément de levier.

2. Amortisseur de vibrations de torsion selon la revendication 1, **caractérisé en ce que** la partie d'entrée ou la partie de sortie est formée par un composant en forme de bride qui porte le au moins un élément de levier.

3. Amortisseur de vibrations de torsion selon l'une quelconque des revendications 1 à 2, **caractérisé en ce que** l'élément de levier basculant dans le sens contraire à un effet de ressort et le ressort hélicoïdal sont montés en série au niveau de l'effet entre la partie d'entrée et la partie de sortie.

4. Amortisseur de vibrations de torsion selon l'une quelconque des revendications 1 à 3, **caractérisé en ce que** le ressort hélicoïdal s'étend dans le sens périphérique de l'amortisseur de vibrations de torsion et génère à l'intérieur de l'amortisseur de vibrations de torsion un frottement dépendant de la force centrifuge et monté parallèlement à l'effet de ressort du ressort hélicoïdal, de sorte que la résistance à la torsion dynamique est générée globalement par le ressort hélicoïdal est dépendante du régime.

5. Amortisseur de vibrations de torsion selon l'une quelconque des revendications 1 à 4, **caractérisé en ce que** la partie de sortie et la partie d'entrée présentent une paroi recouvrant axialement le ressort hélicoïdal, sur laquelle le ressort hélicoïdal s'appuie soit directement au moyen de ses spires soit indirectement au moyen de parties de soutien intercalées au moins sous l'effet de la force centrifuge.

6. Amortisseur de vibrations de torsion selon l'une quelconque des revendications 1 à 5, **caractérisé en ce que** le ressort hélicoïdal porte au moins sur son extrémité coopérant avec un élément de levier une position intermédiaire qui forme les contre-contours lesquels coopèrent avec les contours de l'élément de levier.

7. Amortisseur de vibrations de torsion selon l'une quelconque des revendications 1 à 6, **caractérisé en ce que** l'élément de levier peut basculer de telle sorte que ses contours de retenue sont déplacés pendant le basculement sur une trajectoire de mouvement qui présente une distance variable par rapport à l'axe de rotation du dispositif d'amortissement.

8. Amortisseur de vibrations de torsion selon les revendications 1 à 7, **caractérisé en ce que** l'élément de levier peut basculer de telle sorte que, lors d'un basculement de l'élément de levier en raison d'une sollicitation côté pourtour par le ressort hélicoïdal, les contours de soutien de l'élément de levier sont déplacés le long d'une trajectoire de mouvement de telle sorte que leur distance à l'axe de rotation de l'amortisseur de vibrations de torsion se réduit, de sorte que l'extrémité de ressort correspondante est refoulée en direction de l'axe de rotation.

9. Amortisseur de vibrations de torsion selon l'une quelconque des revendications 1 à 8, **caractérisé en ce que** les contours de l'élément de levier sont formés au moins par une partie formée en forme d'ergot, s'étendant dans le sens périphérique.

10. Amortisseur de vibrations de torsion selon l'une quelconque des revendications 1 à 9, **caractérisé en ce que** les contre-contours prévus sur l'extrémité de ressort correspondante sont formés par un évidement d'une position intermédiaire prévue sur l'extrémité de ressort correspondante.
